# EUROPEAN PATENT SPECIFICATION

(11) **EP 3 531 093 B1**
(45) Date of publication and mention of the grant of the patent: **23.06.2021**
(21) Application number: 19159791.3
(22) Date of filing: 27.02.2019
(51) Int. Cl.: G01K 1/00, G01K 17/06

(54) **COVERED HEAT METERING DEVICE**
ABGEDECKTER HEIZKOSTENVERTEILER
DISPOSITIF D'ALLOCATION DE COÛT DE CHAUFFAGE COUVERT

(30) Priority: 27.02.2018 IT 201800003090
(43) Date of publication of application: 28.08.2019
(73) Proprietor: IoTT IPR-18 S.r.l., 00165 Roma (RM) (IT)
(72) Inventor: Cantagallo, Antonio, 35124 Padova (IT); Natale, Carlo, 35124 Padova (IT); Vesentini, Lorenzo, 35124 Padova (IT); Oliosi, Patrizio, 35124 Padova (IT)
(74) Representative: Fisauli, Beatrice A. M.

(56) References cited:
- EP-A2- 2 690 417
- DE-B3-102010 003 967
- DE-U1-202008 009 279

## Description

The present invention refers to a heat metering device for a radiant terminal unit. In particular, it concerns a heat metering device for application to a radiant terminal unit of a heating system inside the rooms of a building.

The invention falls within the general sector of devices required by law inside rooms provided with radiant terminal units for heating said rooms in a building. For reasons inherent in the task performed by the above-mentioned equipment, the latter is located in full view on the radiant terminal unit, and therefore becomes part of the interior design.

EP 2 690 417 A2, DE 10 2010 003967 B3, and DE 20 2008 009279 U1 disclose examples of heat metering devices.

Said device typically consists of an external part that acts as a container. Inside the container various components (the internal components) are housed, including those that meter the heat in a closed room.

Said container is not formed, typically, as a single body, but consists of two distinct parts that can be separated from each other and then recomposed to re-form the closed container. The container is designed in separable parts so that the device can be adjusted, typically when it is necessary to adjust or change one of the components housed inside it.

It should be noted that the disassembly of a device is recorded in the memory, contained in the device itself, and simultaneously sent to the memory of a cloud storage service. This allows all the interventions made on the device to be traced in order to identify tampering aimed at falsifying the energy consumption measurements. Therefore, the device can be disassembled only by a technician authorized to do so; disassembly by anyone else is considered as tampering with the device and therefore punishable by law.

The aesthetics of said devices available so far on the market depend on their functionality and the job they perform, and they have a standard colour. In other words, they do not generally have an attractive design.

The main drawback of said devices is, therefore, that the owner of the device may find it unattractive due to its style, shape, colour, etc. Another possible reason is, for example, that the device provided is not in harmony with the furnishing scheme of the room in which said device is positioned.

The current laws prohibit the owner of a device from replacing the outer part thereof with one to his/her liking and consequently on the market there is a lack of said outer replacement parts differing from the functional or standard forms. To avoid breaking said laws, the only modification that can be currently made by said owner is the colour, by using paints or self-adhesive paper or similar means.

Said methods have drawbacks, however.

Firstly, said methods are laborious and require manual ability; if not, it is necessary to call in an expert, therefore said methods become relatively costly.

Furthermore, said methods are limited to changing the colour of the device.

The need is felt to overcome the above-mentioned drawbacks, and therefore satisfy those who wish to change the appearance of said devices also in terms of form.

The object of the present invention is a device that can be customized with regard to its outer appearance, form and/or colour, easily, rapidly, inexpensively, and without breaking the law.

A further object is to be able to customize said device even after the installation thereof on a radiant terminal unit.

The predefined objects are achieved by a device provided with a detachable cover which can be interchanged with another cover which is also detachable and interchangeable.

The advantage of said cover is that it can be applied to said device even when the latter is in use, i.e. even when the latter is applied to a radiant terminal unit.

Said cover has the further advantage of concealing from view functional parts of the device which are not aesthetically pleasing, such as screws or other fastening means, present on the container of the device and used to connect the parts of the container to one another and/or fix the device to the radiant terminal unit.

The present invention therefore concerns a covered heat metering device according to claim 1.

In the context of the present invention,
- "bare device" means a device the container of which is not covered by a cover;
- "exposed part" of the container means the part of the container facing the room, i.e. not facing the radiant terminal unit;
- "inner side" of the cover is the side of the cover facing the device during use of the cover;
- "outer side" of the cover is the side of the cover not facing the device but facing the room during use of the cover.

As described previously, the container encloses said internal components of the device. Said container consists typically of several parts, usually two, which can be separated and reunited. In greater detail, one of these parts of the container comprises or constitutes a resting wall, generally flat, one side of which constitutes the resting face. Said side is opposite the one that faces said internal components. The other part, or the set of the other parts, comprises or constitutes the exposed part of the container. The exposed part of the container is arranged around the internal components of the device.

There are devices of said type, the container of which, in particular the exposed part thereof, is provided with a screen (display) on which the data calculated by the components of the device are shown. These data are detected by "reading of the device".

Said display can be recessed with respect to the surface of the exposed part. Said recessing creates a step.

The radiant terminal unit is typically a radiator.

Said cover can have the same shape as the bare device, for example an oval shape or a generic parallelepipedal shape. More in particular, said removable cover can have the same shape as the exposed part of the container. In said case, the dimensions of the former are generally similar to those of the latter, in particular the cover has dimensions slightly larger than said exposed part so as to cover it.

Alternatively, the cover can have a very different shape and/or dimensions from the bare device, according to the design imagined for the cover. In said case, said removable cover can have a very different shape from the bare device, and if necessary also a different dimension, even considerably larger, than the bare device.

Said cover can be in contact or not with the device covered. Said contact between cover and device can be provided only in some parts or points.

According to one embodiment, preferred in particular for the above-mentioned devices provided with display, the cover is of the windowed type, i.e. it has a window. Said window is positioned, preferably, only or at least partly in the area of said display of the device. The window therefore preferably has width and height dimensions corresponding to those of said display.

Said window therefore allows the user to see the heat metering device display when covered by the cover in order to read the data shown on the display.

According to one method of said embodiment, the window is without closing means.

In the present invention, the bare device is covered with the removable cover by coupling between said cover and the container of the device.

Said coupling can be achieved in various ways. Examples of suitable types of coupling are pressure coupling, interlocking, hooking, by sliding and magnetic.

Said coupling can be performed following the selection of at least one characteristic in terms of shape of the cover and/or of the container and connection means present on the cover and/or on the container. Following the selection of at least one said characteristic, the cover can be removable, i.e. at least one connection action is permitted to connect the cover to the bare device and, preferably, also one disconnection action to disconnect the same from the bare device. Naturally, none of said actions entails damage of the device, more precisely of the container, or, preferably, of the cover during the disconnection action.

As mentioned previously, the cover can be provided with connection means.

The connection means can consist of a material with elastic properties or in any case sized so as to permit a certain deformation during coupling with the device. Typical connection means are, for example, pressure or interlocking means. The former act by typically exerting a pressure on a surface of the container, thus securing the cover to the container.

The pressure connection means are, for example, of the type with deformable elastic tongue and tab. The tab is typically applied to an edge.

The tab can extend from any edge of the cover. In particular, the tab extends from the inner side of the cover. The tab has a variable thickness and width, typically a few millimetres.

The tongue can be positioned in any place on the inner side of the removable cover. If present, the cover is generally provided with two or more elastic tongues. Preferably, each tongue is located at each end of the major axis of the cover.

Once the cover is in use, the tongue comes into contact under pressure against a portion of the exposed part of the container. The pressure exerted by the tongues allows the cover to be maintained in the desired position.

The above-mentioned dimension values, in particular those of the connection means, are indicative and can therefore vary.

According to one possible embodiment, the cover can consist, at least partly, of a material with elastic properties, preferably of polymer type. Said materials are deformable and thus allow the cover to be placed on the device by means of pressure coupling.

According to a preferred embodiment, a windowed cover is provided with pressure connection means along the edges of the window. In particular the edge that surrounds the window has a tab, preferably each side of the window is provided with a tab. The tab provided on one side of the window can have a length equal to that of said side or can also be shorter.

The tab rests on the corresponding step surrounding the display. Typically the tab and the step have similar widths, generally between 5 and 30 mm.

According to further alternative embodiments, the cover can also have one of the following characteristics individually or in any technically possible combination thereof:
- the window is provided with openable closing means, for example a door; or
- the window is provided with fixed closing means, but at least partly made of transparent material, in particular in the area of the display.

The cover can be produced, for example, by moulding, when made of a polymer or, more generally, a plastic material.

The cover can furthermore be provided on its outer side with any further element to give it a particular aesthetic and/or decorative and/or even functional look. For example, it can be provided with an ornamental object like a small picture, or a container that can be filled with flowers or plants, for example, or fragrant substances like perfumed oils, etc.

Further characteristics and details of the invention will be better understood from the following description, provided by way of non-limiting example, and from the attached drawings in which:
- figures 1a, 1b and 1c show a front and perspective view, respectively, in two different positions of a device according to an embodiment of the present invention;
- figure 2 shows an exploded perspective view of the device illustrated in figure 1c;
- figure 3 shows a further exploded perspective view of the device illustrated in figure 1c;
- figure 4 shows a lateral view in longitudinal section of the device illustrated in figure 1.

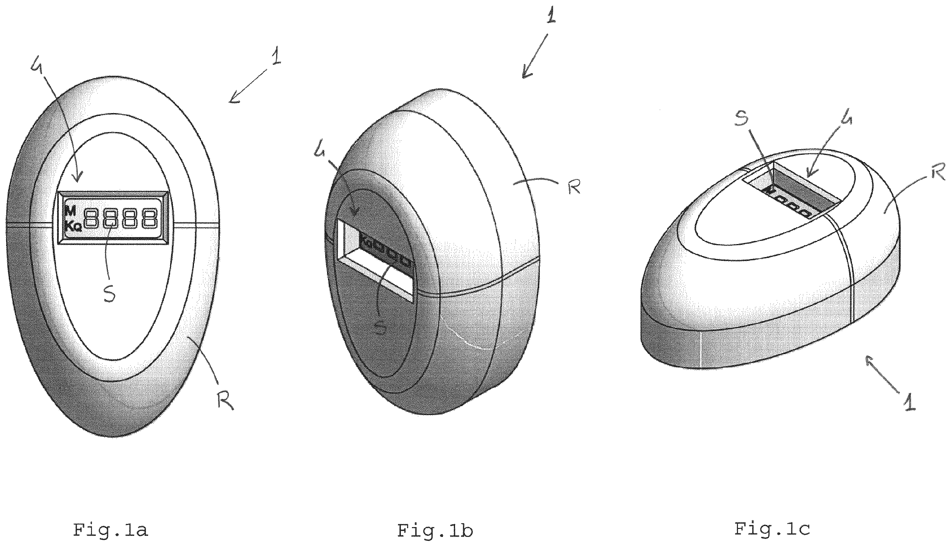

With reference to figures 1a, 1b and 1c, the number 1 indicates a covered heat metering device according to an embodiment of the present invention.

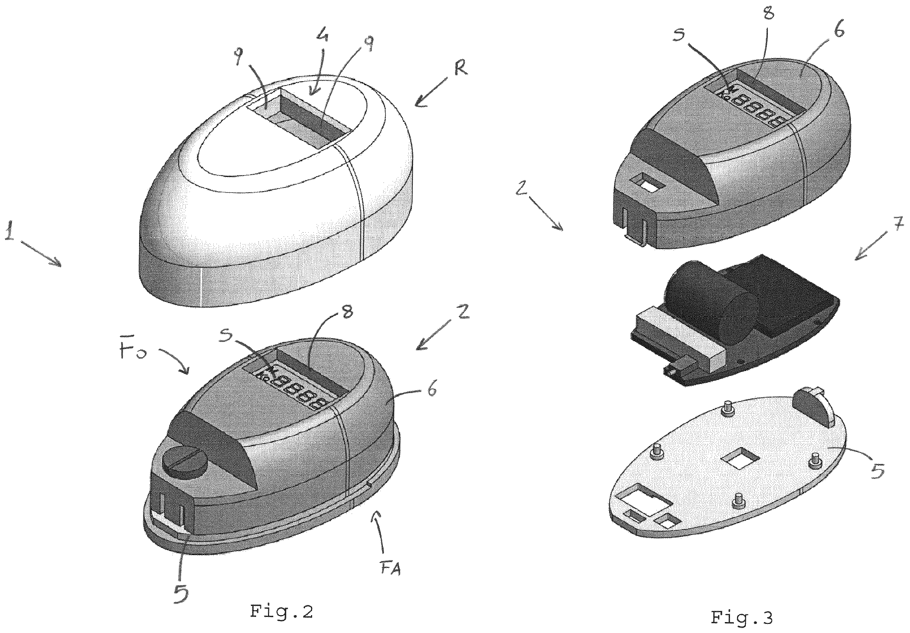

In figure 2 the number 2 indicates the bare device, which has an oval shape, and R the cover. In the embodiment illustrated, the cover R and the device 2 have the same generic oval shape and analogous dimensions.

In figure 3, the device 2 is also represented in an exploded form. A container C is shown, split into its separable parts, i.e. a flat resting wall 5, a side of which constitutes the resting face F_{A}, not visible in the figure, and an exposed part 6.

In the embodiment illustrated in the figures, the exposed part 6 of the container C is concave so as to accommodate the internal components 7 of the device 2.

The exposed part 6 is provided with a display S, which is recessed with respect to the surface of the exposed part, as can be seen in the figures. This creates a step 8.

According to the embodiment illustrated in the figures, the cover R is provided with a window 4.

As can be seen in the figures, the window 4 is located in the area of the display S of the device 2 and has width and height dimensions that correspond to those of said display.

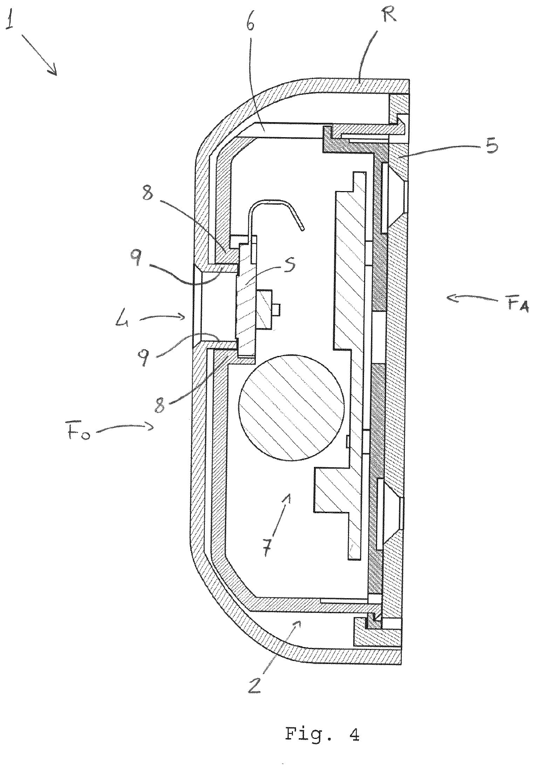

As can be seen in figure 4, the edge of the window 4 is provided with tabs 9. The tabs 9 extend along all sides of the window and each side is provided with a tab 9 as long as the side itself. Each tab 9 couples with the corresponding step 8 of the display S. Therefore the tab and the step have similar widths.

According to another embodiment, not shown in the figures, the oval cover R is provided on its inner side with elastic tongues. The tongues are preferably at least in the area of each end of the major axis of the cover R and if necessary also on the lateral walls.

The cover R can be made of various materials. For example, it can consist completely or partly of a flexible or rigid polymer material. Said material can be thermoplastic or thermosetting. In these cases, the cover R can be produced preferably by moulding. The cover R can if necessary be made, at least partly, of rigid material, such as wood, or other materials that do not negatively affect the electromagnetic transmission of the data, according to personal tastes.

## Claims

1. A covered heat metering device (1) comprising a heat metering device (2) having at least one resting face (F_{A}) and an opposite face (Fo) opposite the resting face (F_{A}), said heat metering device (2) comprising a container enclosing internal components, said container consisting of several separable and joinable parts, one of the said parts comprising or constituting the resting face (F_{A}), the other part, or the set of the other parts, comprising or constituting an exposed part of the container that is arranged around the internal components of the heat metering device (2), **characterized by** the fact that it comprises a removable cover (R) that covers at least a part of said heat metering device (2) except at least the resting face (F_{A}) thereof, said removable cover (R) can be coupled with the container of the device by connection means (3) present on the cover and/or by means of the shape of the cover, so that said cover can be applied to said heat metering device (2) even when the latter is in use, i.e. when the latter is applied to a radiant terminal unit.

2. The covered heat metering device (1) according to the preceding claim wherein the cover (R) and the heat metering device (2) are coupling by pressure coupling, interlocking, hooking, by sliding and magnetic.

3. The covered heat metering device (1) according to any one of the preceding claims wherein said connection means (3) are of the tab and/or elastic tongue type.

4. The covered heat metering device (1) according to the preceding claim wherein the cover (R) consists at least partly of a rigid or elastic polymer material.

5. The covered heat metering device (1) according to any one of the preceding claims wherein the cover (R) has a window (4).

6. The covered heat metering device (1) according to the preceding claim wherein the heat metering device (2) is provided with a display (S) and said window (4) is positioned only or at least partly in the area of said display (S) of the heat metering device (2).

7. The covered heat metering device (1) according to any one of the preceding claims 5 and 6 wherein the cover (R) is provided with pressure connection means along the edges of the window (4).

8. The covered heat metering device (1) according to any one of the preceding claims wherein the cover (9) has the same shape as the heat metering device (2).

9. The covered heat metering device (1) according to any one of the claims from 5 to 8 wherein the cover (9) covers the entire heat metering device (2) except for the resting face (F_{A}) thereof.

## Patentansprüche

1. Eine abgedeckte Wärmemessvorrichtung (1), umfassend eine Wärmemessvorrichtung (2), die mindestens eine Auflagefläche (F_{A}) und eine der Auflagefläche (F_{A}) gegenüberliegende Gegenfläche (Fₒ) aufweist, wobei die besagte Wärmemessvorrichtung (2) einen Behälter umfasst, der innere Komponenten einschließt, wobei der besagte Behälter aus mehreren trennbaren und zusammenfügbaren Teilen besteht, wobei eines der besagten Teile die Auflagefläche (F_{A}) umfasst oder bildet, das andere Teil, oder der Satz der anderen Teile, einen freiliegenden Teil des Behälters umfasst oder bildet, der um die inneren Komponenten der Wärmemessvorrichtung (2) herum angeordnet ist, **dadurch gekennzeichnet, dass** sie eine abnehmbare Abdeckung (R) umfasst, die zumindest einen Teil der besagten Wärmemessvorrichtung (2) mit Ausnahme zumindest ihrer Auflagefläche (F_{A}) abdeckt, wobei die besagte abnehmbare Abdeckung (R) mit dem Behälter der Vorrichtung durch Verbindungsmittel (3), die an der Abdeckung vorhanden sind, und/oder durch die Form der Abdeckung gekoppelt werden kann, so dass die besagte Abdeckung an der besagten Wärmemessvorrichtung (2) angebracht werden kann, selbst wenn letztere in Gebrauch ist, d.h. wenn letztere an einem Strahlungsendgerät angebracht ist.

2. Die abgedeckte Wärmemessvorrichtung (1) gemäß dem vorhergehenden Anspruch, wobei die Abdeckung (R) und die Wärmemessvorrichtung (2) durch Druckkupplung, Verriegelung, Einhaken, durch Gleiten und magnetisch gekoppelt sind.

3. Die abgedeckte Wärmemessvorrichtung (1) gemäß einem jeglichen der vorhergehenden Ansprüche, wobei die besagten Verbindungsmittel (3) vom Typ einer Lasche und/oder einer elastischen Zunge sind.

4. Die abgedeckte Wärmemessvorrichtung (1) gemäß dem vorhergehenden Anspruch, wobei die Abdeckung (R) zumindest teilweise aus einem starren oder elastischen Polymermaterial besteht.

5. Die abgedeckte Wärmemessvorrichtung (1) gemäß einem jeglichen der vorhergehenden Ansprüche, wobei die Abdeckung (R) ein Fenster (4) aufweist.

6. Die abgedeckte Wärmemessvorrichtung (1) gemäß dem vorhergehenden Anspruch, wobei die Wärmemessvorrichtung (2) mit einer Anzeige (S) versehen ist und das besagte Fenster (4) nur oder zumindest teilweise im Bereich der besagten Anzeige (S) der Wärmemessvorrichtung (2) angeordnet ist.

7. Die abgedeckte Wärmemessvorrichtung (1) gemäß einem jeglichen der vorhergehenden Ansprüche 5 und 6, wobei die Abdeckung (R) mit Druckverbindungsmitteln entlang der Ränder des Fensters (4) versehen ist.

8. Die abgedeckte Wärmemessvorrichtung (1) gemäß einem jeglichen der vorhergehenden Ansprüche, wobei die Abdeckung (9) die gleiche Form wie die Wärmemessvorrichtung (2) aufweist.

9. Die abgedeckte Wärmemessvorrichtung (1) gemäß einem jeglichen der Ansprüche 5 bis 8, wobei die Abdeckung (9) die gesamte Wärmemessvorrichtung (2) mit Ausnahme der Auflagefläche (F_{A}) derselben abdeckt.

## Revendications

1. Un dispositif d'allocation de coût de chauffage couvert (1) comprenant :
un dispositif d'allocation de coût de chauffage (2), ayant au moins une face d'appui (F_{A}) et une face opposée (Fₒ) opposée à la face d'appui (F_{A}), ledit dispositif d'allocation de coût de chauffage (2) comprenant un récipient renfermant des composants internes, ledit récipient étant constitué de plusieurs parties séparables et assemblables, l'une desdites parties comprenant ou constituant la face d'appui (F_{A}), l'autre partie, ou l'ensemble des autres parties, comprenant ou constituant une partie exposée du récipient qui est disposée autour des composants internes du dispositif d'allocation de coût de chauffage (2),
**caractérisé par le fait qu'**il comprend un couvercle amovible (R) qui recouvre au moins une partie dudit dispositif d'allocation de coût de chauffage (2) à l'exception d'au moins la face d'appui (F_{A}) de celui-ci, ledit couvercle amovible (R) peut être couplé au conteneur du dispositif par des moyens de connexion (3) présents sur le couvercle et/ou au moyen de la forme du couvercle, de sorte que ledit couvercle peut être appliqué audit dispositif d'allocation de coût de chauffage (2) même lorsque ce dernier est en utilisation, c'est-à-dire lorsque ce dernier est appliqué à une unité terminale radiante.

2. Le dispositif d'allocation de coût de chauffage couvert (1) selon la revendication précédente où le couvercle (R) et le dispositif d'allocation de coût de chauffage (2) sont couplés par accouplement à pression, par emboîtement, par accrochage, par glissement et magnétique.

3. Le dispositif d'allocation de coût de chauffage couvert (1) selon l'une des revendications précédentes où lesdits moyens de connexion (3) sont du type onglet et/ou languette élastique.

4. Le dispositif d'allocation de coût de chauffage couvert (1) selon la revendication précédente où le couvercle (R) est constitué au moins en partie d'un matériau polymère rigide ou élastique.

5. Le dispositif d'allocation de coût de chauffage couvert (1) selon l'une des revendications précédentes où le couvercle (R) a une fenêtre (4).

6. Le dispositif d'allocation de coût de chauffage couvert (1) selon la revendication précédente le dispositif d'allocation de coût de chauffage (2) est muni d'un écran (S) et ladite fenêtre (4) est positionnée uniquement ou au moins partiellement dans la zone dudit écran (S) du dispositif d'allocation de coût de chauffage (2).

7. Le dispositif d'allocation de coût de chauffage couvert (1) selon l'une des revendications précédentes 5 et 6 où le couvercle (R) est muni de moyens de raccordement par pression le long des bords de la fenêtre (4).

8. Le dispositif d'allocation de coût de chauffage couvert (1) selon l'une des revendications précédentes où le couvercle (9) a la même forme que le dispositif d'allocation de coût de chauffage (2).

9. Le dispositif d'allocation de coût de chauffage couvert (1) selon l'une des revendications de 5 à 8 où le couvercle (9) couvre la totalité du dispositif d'allocation de coût de chauffage (2) à l'exception de la face d'appui (F_{A}) de celui-ci.
